# EUROPÄISCHE PATENTSCHRIFT

(11) **EP 2 236 275 B1**
(45) Veröffentlichungstag und Bekanntmachung des Hinweises auf die Patenterteilung: **14.12.2011**
(21) Anmeldenummer: 09157316.2
(22) Anmeldetag: 03.04.2009
(51) Int. Cl.: B31B 19/90, B65D 75/58

(54) **Herstellungsverfahren für eine flexible Verpackungsfolie mit Wiederverschluss**
Method for producing a flexible packaging films with reclosure
Procédé de fabrication pour une feuille d'emballage flexible dotée d'une fermeture refermable

(43) Veröffentlichungstag der Anmeldung: 06.10.2010
(73) Patentinhaber: Mondi AG, 1032 Wien (AT)
(72) Erfinder: Soudais, Stephane, 41334, Nettetal (DE); Madai, Gyula, 1039, Budapest (HU); Zoister, Stefan, 4320, Perg (AT)
(74) Vertreter: Schneider, Michael

(56) Entgegenhaltungen:
- DE-C1- 4 007 649
- US-A- 4 673 601

## Beschreibung

### TECHNISCHES FELD

Die Erfindung betrifft ein Herstellungsverfahren für eine flexible Verpackungsfolie mit Wiederverschluss.

Die Erfindung betrifft weiterhin eine Verpackungsfolie, die gemäß dem eingangs erwähnten Herstellungsverfahren hergestellt wurde, sowie eine mit ihrer Hilfe hergestellte Verpackung und ihre Verwendung auf einer Beutelmaschine.

Die Erfindung betrifft weiterhin einen Schüttloch-Folienstreifen, der bei besagtem Herstellungsverfahren besagter Verpackungsfolie zur Anwendung kommt.

### HINTERGRUND

In vielen Bereichen der Verpackungsindustrie besteht das Bedürfnis nach einer Verpackung mit einem Wiederverschluss, der ein wiederholtes Öffnen bzw. ein Wiederverschließen erlaubt, um in der Verpackung enthaltene Güter z.B. portionsweise zu entnehmen und nach dem ersten Öffnen unter Verschluss zu lagern. Solche Verpackungen sind beispielsweise aus der Patentanmeidungen WO 2005/123535A1 und US-A-4 673 601 bekannt. Die in WO 2005/123535A1 beschriebene Verpackung weist als Wiederverschluss ein auf der Außenseite der Verpackung benachbart zu jenem Bereich, an dem die Verpackung geöffnet wird, angebrachtes druck-sensitives Klebeetikett auf.

Diese Lösung wird in der WO 2005/123535A1 als relativ nachteilig dargestellt und es wird zur Vermeidung der damit erörterten Probleme eine andere Lösung vorgeschlagen, bei welcher kein zusätzliches Etikett zur Anwendung kommt, sonder der Wiederverschluss direkt durch die Verpackungsfolie der Verpackung realisiert ist. In dieser Realisierung ist eine Zone in der Verpackungsfolie ausgebildet, in der zwei benachbarte Schichten durch einen druck-sensitiven Kleber miteinander verbunden sind. Entlang dieser Zone lässt sich die Verpackung wiederholt öffnen und schließen. Der Wiederverschluss ist also in die Verpackungsfolie integriert.

Jedoch ist auch diese Lösung durch designinhärente Nachteile belastet, weil beispielsweise die Belastbarkeit der Verpackungsfolie bzw. ihre Formstabilität im Bereich der Öffnung der Verpackung durch die mechanischen Parameter der Verpackungsfolie begrenzt ist und die Öffnung selbst eine mechanische Störung der Struktur der Verpackungsfolie darstellt. Insbesondere hat sich die Handhabung des Wiederverschlusses als problematische erwiesen, weil sich die Verpackung im Bereich ihrer Öffnung durch Zugeinwirkung auf den Wiederverschluss - also beim Öffnen des Wiederverschlusses - stark verformen kann. Andererseits kann das schließen des Wiederverschlusses mitunter schwierig sein, wenn die Verpackung im Bereich ihrer Öffnung stark verformt ist.

Es ist daher eine Aufgabe der vorliegenden Erfindung, ein Herstellungsverfahren für eine flexible Verpackungsfolie und eine solche Verpackungsfolie der eingangs genannten Art für eine Verwendung bei einer Verpackung bzw. für einen Einsatz bei einer Beutelmaschine weiterzuentwickeln und einen Schüttloch-Folienstreifen bereitzustellen, sodass die vorstehend genannten Nachteile vermieden sind.

### ZUSAMMENFASSUNG DER ERFINDUNG

Die Aufgabe wird zum einen durch ein Herstellungsverfahren gemäß Anspruch 1 und zum anderen durch eine Verpackungsfolie gemäß Anspruch 12 und eine Verpackung gemäß Anspruch 14 und eine Verwendung einer solchen Verpackung gemäß Anspruch 13 und eine Verwendung der erfindungsgemäßen Verpackungsfolie gemäß Anspruch 14, sowie durch einen Schüttloch-Folienstreifen gemäß Anspruch 15 gelöst.

Erfindungsgemäß weist ein Herstellungsverfahren für eine Verpackungsfolie die nachfolgend angeführten Verfahrensschritte auf, nämlich Zuführen einer Folienbahn entlang einer Laufrichtung und Erzeugen einer eine Aufreißlasche in der Folienbahn begrenzende erste Materialschwächung an einer Aufreißlaschenposition und Zuführen eines Schüttloch-Folienstreifens, welcher Schüttloch-Folienstreifen eine zumindest dreischichtige Struktur aufweist, wobei die zumindest dreischichtige Struktur zumindest ein Schüttloch begrenzt und wobei die zumindest dreischichtige Struktur eine Folienstreifen-Siegelschicht und eine benachbart zu der Folienstreifen-Siegelschicht gelegene Haftkleberschicht und eine benachbart zu der Haftkleberschicht auf der von der Folienstreifen-Siegelschicht abgewandten Seite der Haftkleberschicht gelegene Trägerfolienschicht aufweist, wobei die Folienstreifen-Siegelschicht eine Sollbruchschicht realisiert, die derart beschaffen ist, dass sich unter Zugkraftweinwirkung auf einen das Schüttloch zumindest teilweise umlaufenden Abtrennbereich dieser Sollbruchschicht ein Bruch entlang eines Randes des Abtrennbereiches in der Sollbruchsschicht ausbreitet, und Anbringen des Schüttloch-Folienstreifens an jener Seite der Folienbahn, die bei einer bestimmungsgemäßen Verwendung der Verpackungsfolie eine Folieninnenseite einer Verpackung bildet, sodass besagte Zugkrafteinwirkung über die Aufreißlasche auf den Abtrennbereich übertragbar ist und besagter Abtrennbereich und der angrenzende Bereich der Haftkleberschicht einen mit der Aufreißlasche zusammenwirkenden Wiederverschluss bilden.

Weiterhin ist eine erfindungsgemäße Verpackungsfolie dadurch charakterisiert, dass sie gemäß dem erfindungsgemäßen Herstellungsverfahren hergestellt wurde. Zudem weist eine erfindungsgemäße Verpackung eine gemäß dem erfindungsgemäßen Herstellungsverfahren hergestellte Verpackungsfolie auf. Zudem wird eine solche erfindungsgemäße Verpackungsfolie auf einer Beutelmaschine, die zum Formen eines flexiblen Beutels aus der Verpackungsfolie ausgebildet ist, verwendet.

Weiterhin weist ein erfindungsgemäßer Schüttloch-Folienstreifen eine zumindest dreischichtige Struktur auf, welche zumindest dreischichtige Struktur zumindest ein Schüttloch begrenzt, wobei die zumindest dreischichtige Struktur eine Folienstreifen-Siegelschicht und eine benachbart zu der Folienstreifen-Siegelschicht gelegene Haftkleberschicht und eine benachbart zu der Haftkleberschicht auf der von der Folienstreifen-Siegelschicht abgewandten Seite der Haftkleberschicht gelegene Trägerfolienschicht aufweist, wobei die Folienstreifen-Siegelschicht eine Sollbruchschicht realisiert, die derart beschaffen ist, dass sich unter Zugkraftweinwirkung auf einen das Schüttloch zumindest teilweise umlaufenden Abtrennbereich dieser Sollbruchschicht ein Bruch entlang eines Randes des Abtrennbereiches in der Sollbruchsschicht ausbreitet.

Unter einer "Folienbahn" ist eine kontinuierliche Folie zu verstehen, die beispielsweise von einer Rolle abgerollt wird und so dem Herstellungsverfahren zugänglich gemacht wird. Es kann sich jedoch auch um bereist zugeschnittene Folienbahn-Abschnitte handeln, die sequenziell am Beginn des Herstellungsverfahren zugänglich gemacht werden. Die Folienbahn weist bevorzugt eine Verbundfolienstruktur auf. Sie kann aber auch einschichtig ausgebildet sein. Die gemäß dem Herstellungsverfahren hergestellte "Verpackungsfolie" ist in beiden Fällen durch die Kombination mit dem Schüttloch-Folienstreifen erhalten.

Eine solche Verpackungsfolie kann beispielsweise einen flexiblen wiederverschließbaren Deckel einer Schüssel bilden, also nur einen Bestandteil einer Verpackung realisieren, oder als ganzes durch geeignetes Falten und Versiegeln an ihren Kanten z.B. einen flexiblen wiederverschließbaren Beutel bilden.

Unter dem Begriff der "Laufrichtung" ist im Wesentlichen die globale oder bereichsweise Bewegungsrichtung der Folienbahn während des Herstellungsverfahrens bzw. zwischen den Verfahrensschritten zu verstehen.

Die "Materialschwächung" kann beispielsweise bevorzugt durch Lasereinwirkung erzeugt werden, sodass beispielsweise an der jeweiligen Seite der Verpackungsfolie bzw. des Schüttloch-Folienstreifens Material bis zu einer gewissen Tiefe abgetragen wird und sich die Dicke des Materials dort im Verhältnis zu benachbarten Bereichen verändert. Auch Prägetechniken bzw. Ritzverfahren können dafür eingesetzt werden, wobei hierbei insbesondere in Bezug auf die Ästhetik der Folie die Dicke des jeweiligen Materials nicht vollständig durchdrungen wird. Wenn es jedoch nicht um die Ästhetik geht, dann kann das jeweilige Material auch vollständig durchtrennt werden. Die Materialschwächung kann unterschiedlich gestaltet sein. So können beispielsweise durchgehende Linien realisiert sein. Es können jedoch auch unterbrochene Linien oder Punkte realisiert sein. Auch gemischte Strukturen sind im vorliegenden Kontext umfasst.

Das Zuführen des Schüttloch-Folienstreifens kann beispielsweise stückweise aus einem Magazin heraus erfolgen oder auf kontinuierliche Weise, wie zum Beispiel durch ein Abrollen eines aufgerollten Bandes. Auch kann die Richtung des Zuführens unterschiedlich sein. Als typische Beispiele sei hier nur das Zuführen von z.B. oberhalb der Folienbahn oder das Zuführen von seitlich der Folienbahn erwähnt.

Die Folienstreifen-Siegelschicht des Schüttloch-Folienstreifens hat die Materialeigenschaft, dass sie sich möglichst einfach und dauerhaft an der Folienbahn bzw. präziser gesagt an jener Seite der Folienbahn anbringen lässt, die bei der bestimmungsgemäßen Verwendung der Verpackungsfolie die Innenseite der mit Hilfe der Verpackungsfolie erzeugten Verpackung bildet. Die Folienstreifen-Siegelschicht kann beispielsweise aus einem "Löw Density Polyethylen" (LDPL) oder einem "Medium Density Polyethylen" (MDPL) gefertigt sein, was auch ein leichtes Einreißen dieser Schicht - und zwar auch ohne eine explizite Materialschwächung - erlaubt. Daher wird im Fachjargon diese Schicht bzw. dieser Folientyp auch als "easy tear" Typ bezeichnet. Typischerweise weist auch die Verpackungsfolie an dieser Innenseite eine siegelfähige Schicht auf, welche ähnliche oder identische Materialeigenschaften aufweist wie die Folienstreifen-Siegelschicht.

Das Anbringen umfasst typsicherweise ein Versiegeln der Folienstreifen-Siegelschicht mit der dazu korrespondierenden Schicht der Folienbahn. Ein solches Versiegeln kann beispielsweise durch ein Kalt- oder Heißversiegeln realisiert werden. Bei dem Kaltversiegeln wird ein Kleber eingesetzt, wobei die Haftkraft dieses Klebers wesentlich großer sein muss, als die des Haftklebers, der in der Haftkleberschicht des Schüttloch-Folienstreifens zum Einsatz kommt. Beim Heißversiegeln werden benachbarte Folienbereiche miteinander verschmolzen.

In der Haftkleberschicht kommt ein Haftkleber zum Einsatz, der sowohl an dem der Trägerfolienschicht zugewandten Material der zumindest dreischichtigen Struktur des Schüttloch-Folienbandes, als auch an dem der Folienstreifen-Siegelschicht zugewandten Material der zumindest dreischichtigen Struktur haftet und ein mehrmaliges loslösen und neuerliches verkleben dieser beiden Materialien bzw. Schichten erlaubt. Der Haftkleber hat also die Eigenschaft, dass er selbst bei mehrmaliger Betätigung des Wiederverschlusses seine Abziehbarkeit ("Peelfähigkeit") im Wesentlichen behält. Als Substanzen kommen hier beispielsweise synthetischer Kautschuk, Acrylester, oder andere z.B. heiß schmelzende Kleber - sogenannte "Hotmelts" - zum Einsatz.

Die Trägerfolienschicht bildet die Basis, auf der die weiteren Schichten der zumindest dreischichtigen Struktur des Schüttloch-Folienstreifens aufgebaut sind. Als Material kann hierfür beispielsweise Polyester (PET) mit einer Stärke von 23-100 µm zur Anwendung kommen, was auch zur geforderten Steifigkeit beiträgt. In vielen Fällen wird die Struktur des Schüttloch-Folienbandes genau drei Schichten, nämlich die Trägerfolienschicht und die Folienstreifen-Siegelschicht und dazwischen eingebettet die Haftkleberschicht aufweisen. Diese Schichten sind also unmittelbar zueinander "benachbart", also aneinander anliegend. Es kann jedoch auch sein, dass weitere z.B. zur Erhöhung der Steifigkeit des Schüttloch-Folienstreifens beitragende Material- bzw. Folienschichten vorliegen können, deren Lage in Bezug auf die Haftkleberschicht sowohl auf der einen Seite als auch auf der anderen Seite der Haftkleberschicht lokalisiert sein kann. Auch können diese zusätzlichen Schichten flächendeckend oder lokal, wie z.B. rahmenförmig oder gitterförmig ausgebildet sein. Die Folienstreifen-Siegelschicht und / oder die Trägerfolienschicht sind dann nicht unmittelbar zu der Haftkleberschicht "benachbart" lokalisiert, sondern über Zwischensichten von der Haftkleberschicht getrennt.

Bei dem Anbringen des Schüttloch-Folienstreifens wird zwischen der Aufreißlasche und dem zuvor beschriebenen das Schüttloch umgebenden Abtrennbereich des Schüttloch-Folienstreifens eine Verbindung hergestellt, sodass mit Hilfe der Aufreißlasche besagte Zugkraft auf diesen Abtrennbereich ausgeübt werden kann und dieser Abtrennbereich entlang des Rands besagter Verbindung - entweder in einer Flucht mit dem Rand der Verbindung oder in einem Abstand davon - somit aus der Verpackungsfolie herausgelöst bzw. abgetrennt werden kann. Dies realisiert eine sogenannte "easy tear" Eigenschaft. Der Abtrennbereich kann also Flächig von einer darunterliegenden Schicht oder von darunterliegenden Schichten des Schüttloch-Folienstreifens abgetrennt werden. Der Rand des Abtrennbereiches verläuft üblicherweise innerhalb der äußeren Umrandung des Schüttloch-Folienstreifens in einem bestimmten Abstand von dem Rand des Schüttloches, sodass der Abtrennbereich eine gewisse Bereite zwischen dem (äußeren) Rand des Abtrennbereiches und dem Rand des Schüttloches (innerer Rand des Abtrennbereiches) aufweist. Der äußere Rand des Abtrennbereiches kann in einer Flucht mit der ersten Materialschwächung oder benachbart dazu gelegen sein.

Die Dicke des herausgelösten Materials endet mit der Haftkleberschicht oder ragt zumindest in sie hinein bzw. umfasst ihre maximale Ausdehnung bis hin zu der an die Haftkleberschicht angrenzenden anderen Schicht der zumindest dreischichtigen Struktur des Schüttloch-Folienbands. Wenn es beispielsweise darum geht, dass der an der Verpackung zurückbleibende Teil des Schüttloch-Folienstreifens - also der nicht mit der Aufreißlasche herausgelöste Teil - keinen Klebstoff ausweisen soll, weil sonst eine Kontamination mit dem Verpackungsgut zu befürchten ist, ist die zuletzt angesprochenen Varianten zu bevorzugen.

Durch das kraftübertragende Zusammenwirken des Abtrennbereiches mit der Aufreißlasche entsteht letztendlich der Wiederverschluss, weil durch ein Zurückbringen der Aufreißlasche in ihre Ausgangsposition im Verbund der Verpackungsfolie die zuvor beim Aufreißen geöffnete Haftkleberschicht wieder eine klebende Verbindung zwischen den durch das Aufreißen getrennten Teilen des Schüttloch-Folienstreifens herstellt.

Die Orientierung und Position des Schüttloch-Folienstreifens wird dabei typsicherweise so gewählt, dass sich die Form des Schüttlochs mit der Form der Aufreißlasche korrespondiert, um ein einfaches Öffnen und Wiederverschließen zu ermöglichen.

Durch das Vorsehen der erfindungsgemäßen Maßnahme ist auf vorteilhafte Weise erreicht, dass bei einer Verpackungsfolie ein Wiederverschluss realisiert ist, der durch seine mehrschichtige Struktur im Bereich der wiederverschließbaren Öffnung der Verpackungsfolie eine erhebliche Stabilität verleiht, die sogar benachbarte Bereiche der Verpackungsfolie bei weitem übertrifft. Dies ist durch die Integration des Schüttloch-Folienstreifens mit der Folienbahn im Verlauf des erfindungsgemäßen Herstellungsverfahrens erreicht. Die erfindungsgemäße Verpackung, die letztendlich aus einem Folienabschnitt der verarbeiteten Folienbahn, also aus der Verpackungsfolie erzeugt wurde, stellt sicher, dass die Haltbarkeit des Füllgutes verlängert wird und eine unbeabsichtigte Entleerung der Verpackung vermieden wird. Zudem erlaubt die bereits in dem Schüttloch-Folienstreifen integrierte Schüttlochstruktur, welche sowohl die Form eines Schüttloches wie auch die Anzahl der Schüttlöcher betrifft, eine auf den jeweiligen Anwendungsfall abgestimmte Lösung, welche auf die geplante Portionierbarkeit des mit der Verpackung verpackten Verpackungsgutes abgestimmt ist.

Demgemäß kann die Aufreißlasche, die in der Folienbahn erzeugt wird, eine beliebige standardisierte Form aufweisen und einzig und allein durch die Anpassung des wesentlich kleineren und daher auch kostengünstigeren Schüttloch-Folienstreifens dem jeweiligen Anforderungsprofil Rechnung getragen werden. Hinsichtlich der Vorteile in Bezug auf die Aufreißlasche sei erwähnt, dass der an der Aufreißlasche angebrachte Bereich des Schüttloch-Folienstreifens bei geöffneter Aufreißlasche diese mechanisch stabilisiert, also ein Einrollen oder dergleichen verhindert. Dieser Effekt kommt insbesondere dann zum Tragen, wenn der an der Aufreißlasche angebrachte Bereich des Schüttlochbandes in der äußeren Peripherie der Aufreißlasche verläuft.

Die so realisierte wiederverschließbare Verpackungsfolie erzielt einen erheblichen Kostenvorteil gegenüber herkömmlichen Ausgießerkonzepten und Lösungen, die auf Zipper- oder Reißverschluss-Systemen basieren.

Hinsichtlich der Steifigkeit des Lochbandes sei erwähnt, dass der Schüttloch-Folienstreifen neben seiner stabilisierend wirkenden mehrschichtigen Struktur einen oder mehrere Querstege aufweisen kann, welche eine unterbrochene Lochstruktur schaffen. Damit ist auch bei einer integralen relativ großen Öffnung des oder der Schüttlöcher die geforderte Steifigkeit der Verpackungsfolie im Bereich des Wiederverschlusses gewährleistet, sodass die zur Wiederverschließbarkeit vorgesehene Haftkleberschicht problemlos aufgebrochen und ohne weitere positionstechnische Schwierigkeiten wieder geschlossen werden kann. Einer ungewollten Deformation des Schüttlochs oder der Schüttlöcher wird daher gezielt entgegengewirkt. Die Segmentierung des Schüttloches kann auch entscheidend dazu beitragen, dass ein Haustier davon abgehalten wird, seinen Kopf in einen Beutel zu stecken und dadurch z.B. in Lebensgefahr gerät. Um Gefahrensituationen mit Haustieren möglichst zu vermeiden, kommt das Schüttlochband bevorzugt in der Seitenfalte des Beutels zum Einsatz.

Weitere, besonders vorteilhafte Ausgestaltungen und Weiterbildungen der Erfindung ergeben sich aus den abhängigen Ansprüchen sowie der nachfolgenden Beschreibung. Die im Zusammenhang mit dem Herstellungsverfahren genannten Vorteile gelten übertragen auch für den Gegenstand der Verwendung bzw. für das hergestellte Produkt

Bei dem Herstellungsverfahren kann jede beliebige Art der Positionsfindung für die Aufreißlaschenposition und die dazu korrespondierende Positionierung des Schüttloch-Folienstreifens eingesetzt werden. In einer bevorzugten Ausführungsform hat es sich jedoch als besonders vorteilhaft erwiesen, wenn auf der Folienbahn eine Drucksteuermarke vorgesehen ist, die außerhalb der Aufreißlasche vorgesehen ist. An dieser Drucksteuermarke kann sich die Herstellungsmaschine sowohl bei der Erzeugung der Aufreißlasche an der Aufreißlaschenposition wie auch bei dem nachfolgenden Anbringen des Schüttloch-Folienstreifens und während weiterer nachfolgender Verarbeitungsschritte orientieren, weil diese Drucksteuermarke immer ersichtlich ist. Eine solche Drucksteuermarke ist eine auf optische Weise erkennbare Markierung, die als Referenzpunkt innerhalb der zu erzeugenden Verpackungsfolie dient.

Gemäß einer bevorzugten Ausführungsform der Erfindung wird bei dem Verfahrensschritt des Erzeugens der ersten Materialschwächung ein Durchschneiden der Folienbahn in einem Anfangsbereich der Aufreißlasche durchgeführt, sodass dieser durch den Schnitt freigelegte Anfangsbereich von einem Benutzer eines mit Hilfe der Verpackungsfolie hergestellten Beutels möglichst einfach z.B. zwischen seinem Zeigefinger und seinem Daumen angefasst werden kann, um nachfolgend die Aufreißlasche aus der Struktur der Verpackungsfolie herauszureißen.

In diesem Zusammenhang ist gemäß einem weiteren Aspekt der Erfindung im Zusammenhang mit dem Verfahrensschritt des Erzeugens der ersten Materialschwächung ein Perforieren der Folienbahn zwischen dem besagten Anfangsbereich und einem Endbereich der Aufreißlasche vorgesehen. Dabei erfolgt das Perforieren derart, dass bei besagtem Anreißen an der Aufreißlasche ein Bruch in der Verpackungsfolie entlang von im Wesentlichen parallel verlaufenden Perforationslinien erfolgt, welche die Breite der Aufreißlasche definieren. Die Perforierung der Folienbahn endet bei dem im Wesentlichen quer zu den Perforationslinien verlaufenden Endbereich der Aufreißlasche, sodass der Endbereich mit der Folienbahn verbunden bleibt und praktisch als ein Scharnier fungieren kann, um welches die aus dem Verbund der Verpackungsfolien herausgerissene Aufreißlasche geschwenkt werden kann.

Das Zuführen des Schüttloch-Folienstreifens kann auf vielerlei Arten erfolgen. So können beispielsweise aufeinander gestapelte Schüttloch-Folienstreifen von oben auf eine eben ausgebreitete Folienbahn zugeführt werden. Als besonders vorteilhaft hat es sich jedoch erwiesen, wenn die Schüttloch-Folienstreifen mit Hilfe eines Schüttloch-Folienstreifen-Bandes bereitgestellt werden. Die Schichtstruktur des Bandes ist dabei typischerweise bereits durch die Schichtstruktur des Schüttloch-Folienstreifens gebildet, sodass keine zusätzliche Band-Trägerschicht nötig ist. Das Schüttloch-Folienband wurde durch vollflächige Applikation eines Haftklebers auf der Trägerschicht und Aufbringen der Folienstreifen-Siegelschicht, also durch Haftkleberkaschierung hergestellt. In diesem Fall weist der Verfahrensschritt des Anbringens ein Abrollen eines solchen Schüttloch-Folienstreifen-Bandes und ein Abtrennen des jeweiligen Schüttloch-Folienstreifens von dem Schüttloch-Folienstreifen-Band und nachfolgendes Stanzen des Schüttloches auf. Das Schüttloch-Folienband kann jedoch auf verschiedenste andere Arten hergestellt werden. So kann beispielsweise in einem Blas-Extrusionsverfahren eine koextrudierte Folie hergestellt werden, die eine erste Polyethylenschicht aufweist, welche die Folienstreifen-Siegelschicht bildet, und die benachbart dazu angrenzend eine heißschmelzende Kleberschicht ("Hotmelt") aufweist, welche die Haftkleberschicht bildet, und die benachbart und angrenzend an die Haftkleberschicht eine zweite Polyethylenschicht aufweist, welche eine Schutzfunktion gegen ein ungewolltes Verkleben hat. Die derart aufgebaute koextrudierte Folie kann dann durch Festkleberkaschierung mit der zweiten Polyethylenschicht auf die Trägerfolienschicht aufgebracht werden, wodurch das Schüttloch-Folienband bzw. letztendlich eine vierschichtige Struktur des Schüttloch-Folienstreifens gebildet ist.

Gemäß einem bevorzugten Ausführungsbeispiel wird dann der von dem Band abgetrennte Schüttloch-Folienstreifen durch ein seitliches Einschießen in einer Querrichtung in Bezug auf die Laufrichtung in dem Herstellungsverfahren weiter verarbeitet bzw. positioniert. Der Schüttlochbandzuschnitt deckt dann also die Aufreißlasche auf der Innenseite der herzustellenden Verpackungsfolie ab. Bevorzugt erfolgt das Positionieren im Register mit der Drucksteuermarke.

Gemäß einem weiteren Ausführungsbeispiel kann in dem Schüttloch-Folienstreifen eine zweite Materialschwächung vorgesehen sein. Die zweite Materialschwächung kann das Schüttloch vollständig oder teilweise umschließen. Die zweite Materialschwächung verläuft zu diesem Zweck in einem Abstand zu dem Schüttloch, sodass sich zwischen der zweiten Materialschwächung und dem Schüttloch besagter Abtrennbereich ausbildet bzw. definiert wird, der aus dem Verbund des Schüttloch-Folienstreifens durch ein Einwirken der Zugkraft auf diesen Abtrennbereich lösbar ist. Um die auf die Aufreißlasche wirkende Zugkraft auch zielgerichtet in die Haftkleberschicht des Schüttloch-Folienstreifens übertragen zu können, ist gemäß einem weiteren Aspekt der Erfindung vorgesehen, dass der Verfahrensschritt des Anbringens ein Positionieren des Schüttloch-Folienstreifens umfasst, sodass die zweite Materialschwächung in dem Schüttloch-Folienstreifen mit der ersten Materialschwächung in der Folienbahn deckungsgleich in einem siegelfreien Bereich verläuft. Zum Zweck des Positionierens kann wieder die Drucksteuermarke zu Hilfe genommen werden.

Um die Funktion des mit Hilfe des Schüttloch-Folienstreifens zur Verfügung gestellten Teils des Wiederverschlusses in die Verpackungsfolie zu bewerkstelligen, ist gemäß einem weiteren Aspekt der Erfindung ein Versiegeln der Folienstreifen-Siegelschicht des Schüttloch-Folienstreifens mit der Folieninnenseite in einem ersten Siegelbereich vorgesehen, wobei der erste Siegelbereich außerhalb der Aufreißlasche um die Aufreißlasche herum verläuft und diese bevorzugt vollständig umschließt und letztendlich hermetisch an der Innenseite der Verpackungsfolie verschließt. Dieser erste Siegelbereich stellt die mechanisch permanente Verbindung zwischen dem Schüttloch-Folienstreifen und der Folienbahn dar.

Der Wiederverschluss, der letztendlich unter Zuhilfenahme der Aufreißlasche betätigt werden soll, wird letztendlich durch ein Versiegeln der Folienstreifen-Siegelschicht des Schüttloch-Folienstreifens mit der Folieninnenseite in einem zweiten Siegelbereich realisiert, wobei der zweite Siegelbereich innerhalb der Aufreißlasche um das Schüttloch herum verläuft. Dadurch ist erreicht, dass die von einem Benutzer auf die Aufreißlasche ausgeübte Zug- oder Druckkraft entsprechend auf den darunter liegenden Teil des Schüttloch-Folienstreifens übertragen werden kann. Es ist also ein leichter Zugang zu dem Schüttloch realisiert. Beim betätigen der Aufreißlasche entsteht ein Bruch in der Folienstreifen-Siegelschicht, der in Folge einen Bereich der Haftkleberschicht freilegt. Zugleich ist durch den vollständig umlaufenden zweiten Siegelbereich auch dem Aspekt der Dichtheit nach erstmaliger Öffnung des Wiederverschlusses der Verpackung Rechnung getragen.

Um die Krafteinleitung über den Anfangsbereich der Aufreißlasche auf den zweiten Siegelbereich zu optimieren, ist in einem bevorzugten Ausführungsbeispiel der Erfindung vorgesehen, dass die Versiegelung an besagtem Anfangsbereich der Aufreißlasche eine Spitzform aufweist, deren Spitz in den Anfangsbereich der Aufreißlasche hineinragt oder zu diesem hingerichtet ist. Es sei erwähnt, dass eine ähnliche Wirkung auch durch eine runde Form erreicht wird.

Die beiden Siegelbereiche können grundsätzlich nacheinander realisiert werden. Hierdurch ist gemäß einer bevorzugten Ausführungsform des Herstellungsverfahrens vorgesehen, dass das Versiegeln in dem ersten Siegelbereich und in dem zweiten Siegelbereich simultan mit einem Profilsiegelwerkzeug erfolgt, was einerseits die Taktgeschwindigkeit bei der Herstellung der Verpackungsfolie als auch die Präzision der Herstellung der beiden Siegelbereiche erhöht.

Zusammenfassend sei erwähnt, dass sich also eine Verpackungsfolie herstellen lässt, wobei bei der Herstellung durch Profilsiegelung des Schüttloch-Folienstreifens über einer vorperforierten Aufreißlasche in der Folienbahn - also das Erzeugen der beiden Siegelbereiche einerseits außerhalb der Aufreißlasche und innerhalb der Aufreißlasche - eine Verpackungsfolie auf einer horizontalen Beutelmaschine vor der Schlauchbildung im Register mit der Druckmarke integriert wird. Die zwei deckungsgleich verlaufenden Materialschwächungen treffen dann sozusagen in einem Bereich aufeinander, in dem keine Versiegelung vorliegt, präziser gesagt in der zwischen den beiden Siegelbereichen verbleibenden nicht versiegelten Zone. Ein Anreißen an der Aufreißlasche überträgt dann einen sich in der ersten Materialschwächung ausbreitenden Bruch in die zweite Materialschwächung und zwar über den zweiten Siegelbereich und öffnet den Wiederverschluss.

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugsziffern versehen.

### FIGURENKURZBESCHREIBUNG

Es zeigt:
- Fig. 1: auf schematische Weise ein Ausführungsbeispiel eines aus einer erfindungsgemäßen Verpackungsfolie gefertigten erfindungsgemäßen Beutels,
- Fig. 2: auf schematische Weise ein erfindungsgemäßes Herstellungsverfahren für die Verpackungsfolie,
- Fig. 3: eine Explosionsdarstellung eines Details der Verpackungsfolie des Beutels nach Fig. 1 entlang von einem Schnitt A-A,
- Fig. 4: eine Frontalansicht auf das Detail der Verpackungsfolie nach Fig. 3.,
- Fig. 5: auf analoge Weise wie die Fig. 3 das Detail in einer anderen Konfiguration,
- Figuren 6A bis 6C: auf schematische Weise drei Ausführungsformen eines erfindungsgemäßen Schüttloch-Folienstreifens mit einem Schüttloch, und
- Figuren 7A bis 7C: auf analoge Weise wie die Figuren 6A bis 6C drei Schüttloch- Folienstreifen mit zwei Schüttlöchern.

### BESCHREIBUNG DER AUSFÜHRUNGSBEISPIELE

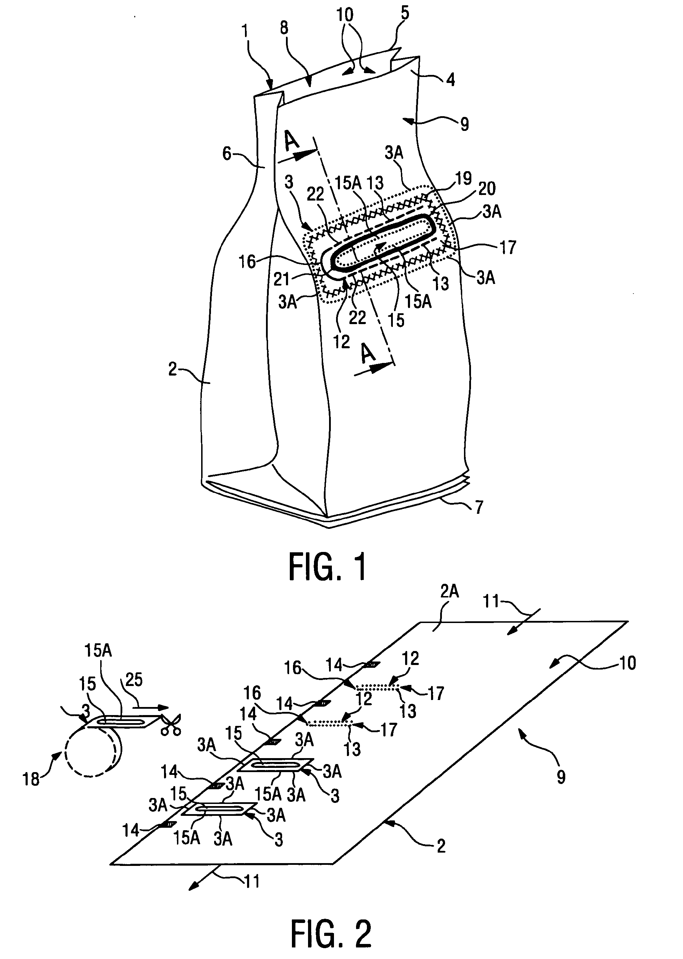

In der Figur 1 ist eine erfindungsgemäße Verpackung in Form eines flexiblen Beutels 1 dargestellt, der aus einer Verpackungsfolie 2 auf einer Beutelfertigungsmaschine (nicht dargestellt) durch Schlauchbildung hergestellt wurde. Der Beutel 1 weist einen Schüttloch-Folienstreifen 3 auf, der an seinem äußeren Umfang durch eine Folienstreifenkante 3A begrenzt ist. Der Beutel 1 weist eine Beutel-Vorderseite 4, eine Beutel-Hinterseite 5 (nicht sichtbar), eine Beutel-Seitenfalte 6, einen Beutel-Boden 7 und eine kopfseitige Beutel-Öffnung 8 auf. Die Beutel-Öffnung 8 dient zum Befüllen und wird danach permanent versiegelt. Die Verpackungsfolie 2, weist eine Folienaußenseite 9 und eine Folieninnenseite 10 auf, wobei die Folieninnenseite 10 durch die Beutel-Öffnung 8 hindurch sichtbar ist. Der Schüttloch-Folienstreifen 3 wurde bei der Herstellung der Verpackungsfolie 2 an jener Seite der Verpackungsfolie 2 angebracht, welche die Folieninnenseite 10 des Beutels bildet.

Die Herstellung der für den Beutel 1 verwendeten Verpackungsfolie 2 erfolgt gemäß einem erfindungsgemäßen Herstellungsverfahren für diese Verpackungsfolie 2, welches die nachfolgenden Verfahrensschritte aufweist.

Zunächst erfolgt ein Zuführen einer Folienbahn 2A entlang einer Laufrichtung 11, so wie dies in der Figur 2 dargestellt ist. Beim Zuführen der Folienbahn 2A erfolgt im Wesentlichen ein Abrollen der Folienbahn 2A von einer Rolle (nicht dargestellt) und ein ebener Transport der abgerollten Folienbahn 2A in der Laufrichtung 11.

In einem weiteren Verfahrensschritt erfolgt an einer Aufreißlaschenposition ein Erzeugen einer eine Aufreißlasche 12 in der Folienbahn 2A begrenzende erste Materialschwächung 13. Dabei wird die Aufreißlaschenposition in Bezug auf eine Drucksteuermarke 14 auf der Folienbahn 2A gewählt. Dabei dient die Drucksteuermarke 14 als Referenzpunkt bzw. -marke für die Aufreißlaschenposition. Die Aufreißlasche 12 wird im Fachjargon also "im Register" mit der Drucksteuermarke 14 erzeugt.

Der Verfahrensschritt des Erzeugens der ersten Materialschwächung 13 weist weiters ein Durchschneiden der Folienbahn 2A an einem Anfangsbereich 16 der Aufreißlasche 12 auf. Dabei wird im Wesentlichen ein halbkreisförmiger oder U-förmiger Schnitt in der Folienbahn 2A realisiert, sodass dieser bogenförmige oder U-förmige Bereich der Folienbahn 2A einen Laschenanfang bildet, der möglichst leicht durch einen Benutzer des Beutels 1 angefasst werden kann. Der Verfahrensschritt des Erzeugens der ersten Materialschwächung 13 weist weiters ein Perforieren der Folienbahn 2A zwischen dem Anfangsbereich 16, also benachbart zu dem zuvor erwähnten Schnitt, und einem Endbereich 17 der Aufreißlasche 12 auf. Bei dem Perforieren werden relativ eng zueinander beabstandete strichartige Einschnitte in der Folienbahn 2A erzeugt, welche die Dicke der Folienbahn 2A durchdringen. Diese Einschnitte erstrecken sich im Wesentlichen von den Endbereichen des bogen- bzw. U-förmigen Einschnitts in dem Anfangsbereich 16 bis hin zu dem Endbereich 17, wobei in dem Endbereich 17 zwischen der linienartigen Perforierung der Folienbahn 2A keine weitere Materialschwächung vorgesehen ist, um ein Einreißen der Aufreißlasche 12 an diesem Endbereich 17 zu beenden. Der Endbereich 17 bildet eine strukturelle Einheit mit der Verpackungsfolie 2 und erlaubt auf zuverlässige Art und Weise ein Aufklappen und Zuklappen - ähnlich einem Scharnier - der Aufreißlasche 12.

In einem weiteren Verfahrensschritt erfolgt ein Zuführen eines Schüttloch-Folienbandes 3. Der Verfahrensschritt des Zuführens des Schüttloch-Folienstreifens 3 umfasst zunächst ein Abrollen eines Schüttloch-Folienstreifen-Bandes 18 und ein Ausstanzen eines Schüttloches 15 und ein Erzeugen einer zweiten Materialschwächung 22 und ein Abtrennen des Schüttloch-Folienstreifens 3 von dem Schüttloch-Folienstreifen-Band 18. Das Erzeugen der zweiten Materialschwächung 22 kann auf analoge Weise wie das Erzeugen der ersten Materialschwächung 13 erfolgen. Der abgetrennte Schüttloch-Folienstreifen 3 wird seitlich in Bezug auf die Laufrichtung 11 der Folienbahn 2A eingeschossen, wobei das Einschießen im Wesentlichen in einer Querrichtung 25 in Bezug auf die Laufrichtung 11 erfolgt.

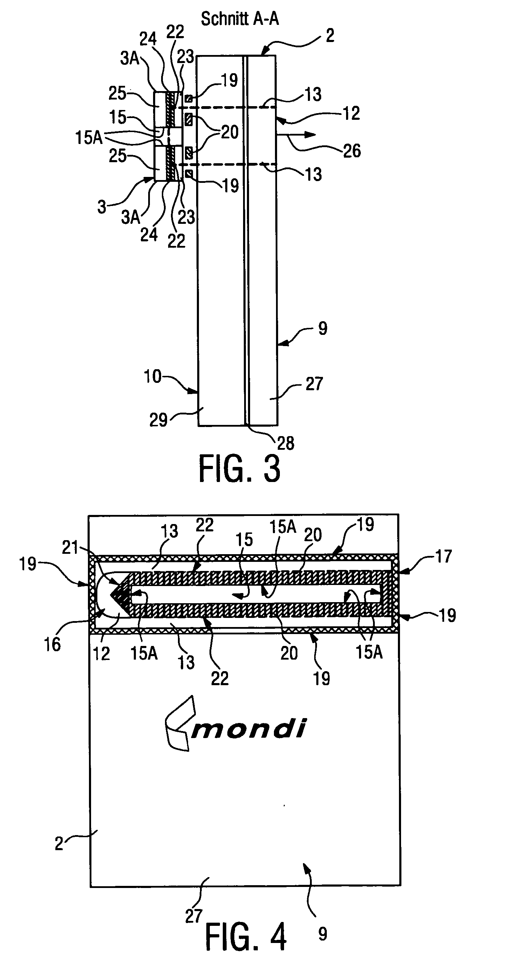

Der Schüttloch-Folienstreifen 3 weist im vorliegenden Fall eine dreischichtige Struktur auf, welche nachfolgend im Kontext der Figuren 3, 4 und 5 erörtert ist. Die dreischichtige Struktur begrenzt entlang einer Schüttlochkante 15A das Schüttloch 15. Die dreischichtige Struktur weist eine Folienstreifen-Siegelschicht 23 und eine benachbart zu der - und unmittelbar angrenzend an die - Folienstreifen-Siegelschicht 23 gelegene Haftkleberschicht 24 und eine benachbart zu der - und unmittelbar angrenzend an die - Haftkleberschicht 24 auf der von der Folienstreifen-Siegelschicht 23 abgewandten Seite der Haftkleberschicht 24 gelegene Trägerfolienschicht 25 auf. Der Schüttloch-Folienstreifen 3 weist weiters die das Schüttloch 15 im vorliegenden Fall vollständig umlaufende zweite Materialschwächung 22 auf, welche zweite Materialschwächung 22 allerdings nur in der Folienstreifen-Siegelschicht 23 ausgebildet ist. Ein Verlauf der zweiten Materialschwächung 22 definiert somit einen äußeren Rand eines Abtrennbereich in der Folienstreifen-Siegelschicht 23. Der Abtrennbereich ist somit einerseits durch das Schüttloch 15 und andererseits durch die zweite Materialschwächung 22 begrenzt. Die Folienstreifen-Siegelschicht 23 realisiert eine Sollbruchschicht, aus welcher der Abtrennbereich durch Einwirkung einer Zugkraft herausgelöst werden kann.

In einem weiteren Verfahrensschritt erfolgt ein Anbringen des Schüttloch-Folienstreifens 3 an der Aufreißlaschenposition an jener Seite der Folienbahn 2A, die bei einer bestimmungsgemäßen Verwendung der Verpackungsfolie 2 die Folieninnenseite 10 der Verpackung 2 bildet. Dabei erfolgt ein Positionieren des Schüttloch-Folienstreifens 3 derart, dass die zweite Materialschwächung 22 in dem Schüttloch-Folienstreifen 3 mit der ersten Materialschwächung 13 in der Verpackungsfolie 2 im Wesentlichen deckungsgleich verläuft, also die Form bzw. Erstreckung des Schüttlochs 18 im Wesentlichen mit der Form bzw. Erstreckung der Aufreißlasche 12 korrespondiert. Zum Positionieren wird wiederum besagte Drucksteuermarke 14 verwendet.

Nach dem Positionieren erfolgt ein Versiegeln der Folienstreifen-Siegelschicht 23 des Schüttloch-Folienstreifens 3 mit der Folieninnenseite 10 in einem ersten Siegelbereich 19, wobei der erste Siegelbereich 19 außerhalb der Aufreißlasche 12 um die Aufreißlasche 12 herum verläuft und diese vollständig umschließt, sowie dies im Detail in der Figur 1 dargestellt ist. Zur Klärung des in der Figur 1 dargestellten Sachverhalts sei an dieser Stelle erwähnt, dass der Schüttloch-Folienstreifen 3 - wie eingangs erwähnt - an der Innenseite 10 der Verpackungsfolie positioniert ist. In der Figur 1 sind zwecks Übersichtlichkeit zusätzlich zu der von außen sichtbaren Perforation der Aufreißlasche 12 auch die wichtigsten strukturellen Begrenzungen des Schüttloch-Folienstreifens 3 sowie seine Verbindungszonen mit der Verpackungsfolie 2 sichtbar dargestellt, auch wenn dies bei einer Betrachtung von außen in Realität nicht möglich wäre.

Der Verfahrensschritt des Anbringens weist weiters ein Versiegeln der Folienstreifen-Siegelschicht 23 des Schüttloch-Folienstreifens 3 mit der Folieninnenseite 10 in dem zweiten Siegelbereich 20 auf, wobei der zweite Siegelbereich 20 innerhalb der Aufreißlasche 12 um das Schüttloch 15 herum verläuft und dieses vollständig umschließt. Die Versiegelung in dem zweiten Siegelbereich 20 erfolgt dabei derart, dass im Wesentlichen entlang der Längserstreckung der Aufreißlasche 12 parallele Siegelzonen existieren, die an dem Endbereich 17 der Aufreißlasche 12 durch eine gerade Siegellinie verbunden sind, so wie dies in der Figur 4 dargestellt ist. Demgegenüber weist die Versiegelung in dem zweiten Siegelbereich 20 an dem Anfangsbereich 16 der Aufreißlasche 12 eine Spitzform 20 auf, was die Krafteinleitung in die Sollbruchschicht beim Aufreißen der Aufreißlasche 12 begünstigt.

Das Versiegeln in dem ersten Siegelbereich 19 und in dem zweiten Siegelbereich 20 erfolgt dabei simultan mit einem Profilsiegelwerkzeug, welches durch sein Profil die Form des ersten Siegelbereichs 19 und des zweiten Siegelbereichs 20 definiert.

Die nach dem Positionieren und Anbringen des Schüttloch-Folienstreifens 3 vorliegende Konfiguration ist im Detail in der Figur 3 dargestellt, die einen Schnitt entlang der Schmittlinie A-A in der Fig. 1 in einer Explosionsdarstellung wiedergibt. Es ist also in der Figur 3 die durch Versiegeln erzeugte kombinierte Struktur aus Folienbahn 2A und Schüttloch-Folienstreifen 3 losgelöst voneinander dargestellt, um die Positions- und Strukturverhältnisse besser zu verdeutlichen.

Der in der Figur 3 im Schnitt A-A dargestellte Schüttloch-Folienstreifen 3 zeigt die dreischichtige Struktur, welche das zentral gelegene längliche und im Wesentlichen rechteckig ausgebildetes Schüttloch 15 aufweist. Die dreischichtige Struktur besteht aus der Folienstreifen-Siegelschicht 23, welche einer Verpackungsfolie-Siegelschicht 29, also der späteren Folieninnenseite 10 der Verpackungsfolie 2 zugewandt ist. Benachbart zu der Folienstreifen-Siegelschicht 23 weist der Schüttloch-Folienstreifen 3 die Haftkleberschicht 24 auf. Benachbart zu der Haftkleberschicht 24 ist die Trägerfolienschicht 25 auf der von der Folienstreifen-Siegelschicht 23 abgewandten Seite der Haftkleberschicht 24 zu sehen. Der Schüttloch-Folienstreifen 3 weist weiters besagte zweite Materialschwächung 22 auf, welche in einem Abstand zu dem Schüttloch 15 das gesamte Schüttloch 15 umschließt. In Richtung der Dicke des Schüttloch-Folienstreifens 3 durchdringt die zweite Materialschwächung 22 in Form von einer Perforation die Folienstreifen-Siegelschicht 23 vollständig.

In einem Bereich zwischen dem Schüttloch-Folienstreifen 3 und der Verpackungsfolie 2 sind schematisch der erste Siegelbereich 19, der wie erwähnt die Aufreißlasche 12 vollständig umschließt, und der zweite Siegelbereich 20, der wie erwähnt das Schüttloch 15 vollständig umschließt, dargestellt. In diesen beiden Siegelbereichen 19 und 20 wird die Folienstreifen-Siegelschicht 23 mit der Verpackungsfolie-Siegelschicht 29 wie erwähnt durch Profilsiegelung versiegelt. Dabei erfolgt innerhalb der Siegelbereiche 19 und 20 ein Verschmelzen des Materials der Folienstreifen-Siegelschicht 23 mit dem Material der Verpackungsfolie-Siegelschicht 29, was im vorliegenden Fall durch von der Verpackungsfolie losgelöste Strukturelemente - nämlich die Materialzonen der Siegelbereiche 19 und 20 - veranschaulicht ist, obwohl diese Strukturelemente vielmehr eine Integration der Folienstreifen-Siegelschicht 23 mit der Verpackungsfolie-Siegelschicht 29 repräsentieren.

Nicht versiegelt sind jener Bereich der Verpackungsfolie 2, der die erste Materialschwächung 13 aufweist, und jener Bereich der Folienstreifen-Siegelschicht 23, der die zweite Materialschwächung 22 aufweist. Deutlich zu sehen ist auch die deckungsgleiche Positionierung beiden Materialschwächungen 13 und 22.

Die in der Figur 3 dargestellte Verpackungsfolie 2 weist weiters eine Trägermaterialschicht 27 auf, deren Außenseite die Folienaußenseite 9 bildet (vgl. Fig. 4). Zwischen der Verpackungsfolie-Siegelschicht 29 und der Trägermaterialschicht 27 befindet sich eine Schicht aus Festklebstoff 28, welche die Trägermaterialschicht 27 mit der Verpackungsfolie-Siegelschicht 29 untrennbar verbindet. Die in der Figur 3 dargestellte Konfiguration ist in der Figur 4 zwecks Übersichtlichkeit von der Außenseite des Beutels 1 aus gesehen dargestellt, wobei jedoch wieder ein "transparenter Blick" durch die Struktur hindurch gegeben ist. Hinsichtlich der verwendeten Materialien sei an dieser Stelle noch beispielhaft erwähnt, dass die Verpackungsfolie-Siegelschicht 29 aus einem "Low Density Polyethylen" (LDP) oder aus einer Mischung ("bland") aus LDP und "Linear Low Density Polyethylen" (LLDP) hergestellt sein kann. Zur Begünstigung der Reißeigenschaft kann man vorzugsweise noch "Medium Density Polyethylen" (MDPL) in beiden Fällen beimischen. Der Festklebstoff 28 kann beispielsweise aus Polyurethan, Polyester und Polyether basiertem lösungsmittelfreien Zwei-Komponenten-Kleber gebildet sein. Für die Trägermaterialschicht 27 kann beispielsweise transparentes Polyester mit einer Dicke von 12 µm (PET 12) oder auch metallisiertes Polyester mit einer Dicke von 12 µm (METPET 12) zum Einsatz kommen. Auch könnte eine Kombination aus einer äußeren Papierschicht mit einer Stärke von z.B. 60 - 90 g/m² und besagtem METPET 12 Anwendung finden.

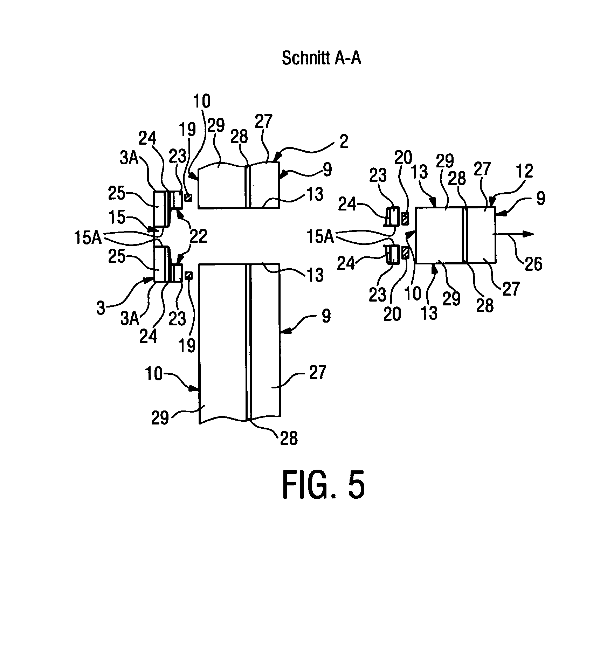

Durch das zuvor beschriebene Anbringen des Schüttloch-Folienstreifens 3 an der bearbeiteten Folienbahn 2A bildet ein Teil der Folienstreifen-Siegelschicht 23 zwischen dem Schüttloch 15 und der zweiten Materialschwächung 22 und der angrenzende Bereich der Haftkleberschicht 24 einen mit der Aufreißlasche 12 zusammenwirkenden Wiederverschluss, worauf nachfolgend im Detail unter Bezugnahme auf die Figur 5 eingegangen ist. In der Figur 5 ist die in der Figur 3 dargestellte Struktur mit geöffneter Aufreißlasche 12 dargestellt.

Das Öffnen der Aufreißlasche 12 erfolgt dabei durch ein Anreißen an der Aufreißlasche 12 beginnend an dem Anfangsbereich 16 und zwar in einer Aufreißrichtung 26, so wie dies in der Figur 3 durch einen Pfeil dargestellt ist. Durch das Anreißen an der Aufreißlasche 12 in der Aufreißrichtung 26 bricht die Verpackungsfolie 2 entlang der ersten Materialschwächung 13 auf. Da jedoch die Verpackungsfolie-Siegelschicht 29 mit der Folienstreifen-Siegelschicht 23 innerhalb des zweiten Siegelbereichs 20 fest (untrennbar) versiegelt ist, setzt sich dieser Bruch durch die Verpackungsfolie 2 in die Folienstreifen-Siegelschicht 23 fort und breitet sich dort entlang der zweiten Materialschwächung 22 in der Folienstreifen-Siegelschicht 23 aus, wobei zugleich der durch die zweite Materialschwächung 22 begrenzte Bereich der Folienstreifen-Siegelschicht 23 von der Haftkleberschicht 24 weggerissen bzw. abgetrennt wird. Dabei bleibt Haftkleber sowohl an der Trägerfolienschicht 25 als auch an dem abgetrennten Bereich der Folienstreifen-Siegelschicht 23 haften. Dies ermöglicht anschließend an das erstmalige Öffnen der Aufreißlasche 12, dass diese wieder in die so entstandene Öffnung hineingedrückt werden kann und sich die mit Haftkleber belegten Bereiche der Folienstreifen-Siegelschicht 23 und der Trägerfolienschicht 25 miteinander verkleben. Der Vorgang des Öffnens und Schließens kann daher mehrfach wiederholt werden, wobei mit Hilfe des Haftklebers immer wieder ein zuverlässiges Verschließen der Öffnung erreicht wird.

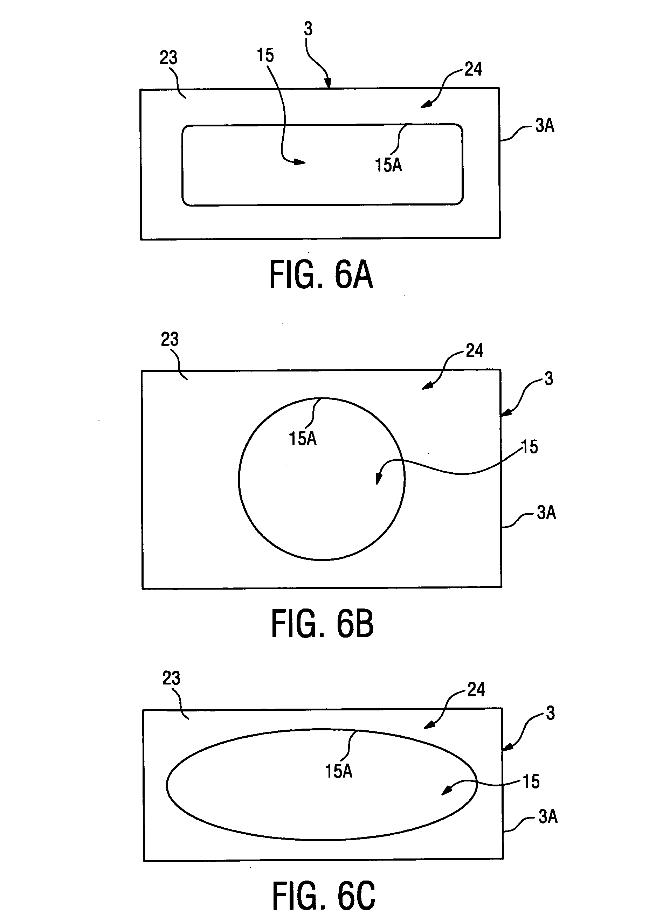

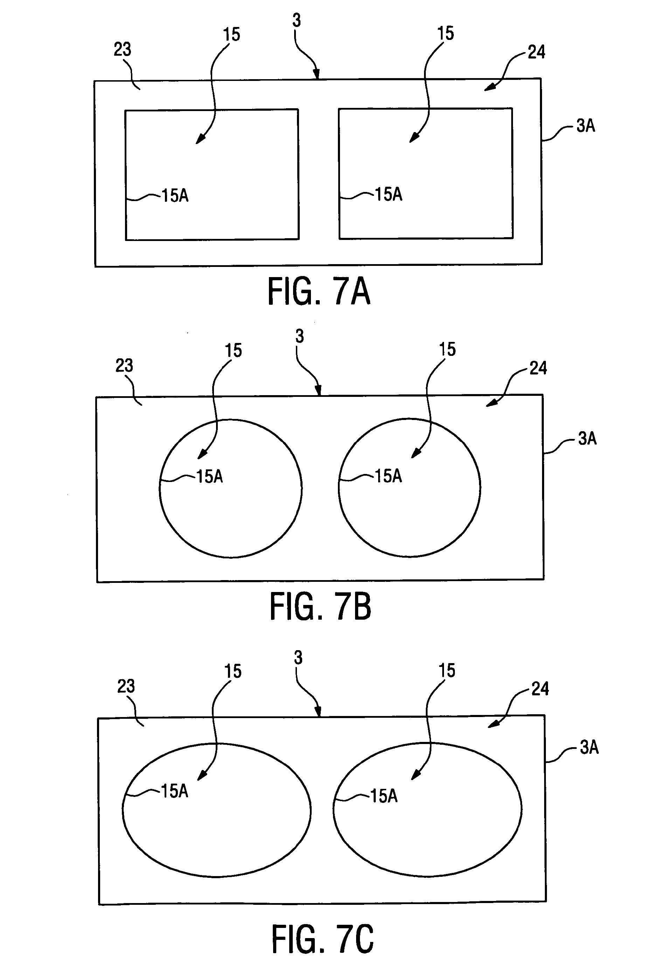

Um in der Verpackungsfolie 2 im Bereich des Wiederverschlusses eine erhöhte Steifigkeit zu erhalten, kann die Form des Schüttloch-Folienstreifens 3 auf unterschiedliche Weise ausgebildet sein. So sind beispielsweise in den Figuren 6A bis 6C unterschiedliche Schüttloch-Folienstreifen 3 dargestellt, die als gemeinsames Merkmal ein einziges Schüttloch 15 aufweisen. Die Form des einzigen Schüttlochs 15 kann für den in der Figur 6A dargestellten Schüttloch-Folienstreifen 3 im Wesentlichen rechteckig mit leicht abgerundeten Ecken beschrieben werden. Das in der Figur 6B dargestellte Schüttloch 15 weist demgegenüber eine Kreisform auf, wohingegen das in der Figur 6C dargestellte Schüttloch 15 eine elliptische Form aufweist. Die Formgebung des Schüttlochs 15 kann einerseits durch die zu entnehmenden Güter bzw. auch ihre Portionierfähigkeit bestimmt sein. Zudem erlaubt andererseits die Formgebung des Schüttlochs 15 - und letztendlich auch das Größenverhältnis zwischen der Abmessung des Schüttlochs 15 und der Abmessung des Schüttloch-Folienstreifens 3 - auch die Verwindungssteifigkeit der Verpackungsfolie 2 im Bereich des Wiederverschlusses zu beeinflussen. Wenn beispielsweise gefordert ist, dass die Struktur im Bereich des Wiederverschlusses möglichst steif ausgebildet sein soll, dann ist es von Vorteil, wenn die in den Figuren 7A-7C dargestellten Schüttlochfolienstreifen 3 zum Einsatz kommen, weil diese zusätzlich zu den zuvor beschriebenen Eigenschaften bzw. Merkmalen noch zusätzlich einen die Struktur versteifenden Steg 31 aufweisen. Bedingt durch den z.B. mittig ausgeführten Steg 31 weisen diese Schüttloch-Folienstreifen 3 jeweils zwei Schüttlöcher 15 auf. Sowohl die Form der Schüttlöcher 15 als auch die Größe bzw. das Größenverhältnis der zwei Schüttlöcher 15 zueinander kann grundsätzlich in einem weiten Bereich und je nach Aufgabenstellung gewählt werden. Auch kann die Anzahl der Stege 31 mehr als 2, z.B. 3, 4 oder sogar 10 betragen. Auch die Orientierung der Stege muss nicht einheitlich sein und es können sich besagte Stege 31 auch kreuzen. In den Figuren 6A bis 6C sowie in den Figuren 7A bis 7C sind die Schüttloch-Folienstreifen 3 mit Blickrichtung auf die Seite der Folienstreifen-Siegelschicht 23 dargestellt. Nur schematisch ist die vollflächige Haftkleberschicht 24 unter der Folienstreifen-Sigelschicht 23 angedeutet.

Gemäß einem bevorzugten Ausführungsbeispiel ist auf die zweite Materialschwächung 22 verzichtet. Der Abtrennbereich bildet sich somit zwischen dem Rand (Schüttlochkante 15A) des Schüttloch 15 und dem am weitesten von dem Schüttloch 15 entfernten Rands des zweiten Siegelbereichs 20 aus und verläuft dann nicht wie in der Fig. 3 bzw. 5 dargestellt mit Abstand zu dem äußeren Rand des zweiten Siegelbereichs 20, sondern im Wesentlichen in einer Flucht mit diesem. Diese Ausbildungsform ist insbesondere dann bevorzugt, wenn die Folienstreifen-Siegelschicht 23 vom Typ "easy tear" ist, also die relativ dünne Sollbruchschicht bildet. Dann kann auch der Beginn des Einreißens der Folienstreifen-Siegelschicht 23 über die Spitzform 21 des zweiten Siegelbereiches 20 erfolgen, und zwar ohne dass eine zusätzliche Materialschwächung in der Folienstreifen-Siegelschicht 23 nötig ist. Bei einem weiteren Anreißen an der Aufreißlasche 12 pflanzt sich dann der Bruch durch die Folienstreifen-Siegelschicht 23 entlang des äußeren Randes des zweiten Siegelbereiches 20 fort und der Abtrennbereich wird flächig von dem Schüttloch-Folienstreifen 3 abgetrennt, und zwar bis hin zu dem Endbereich 17, wo dieser Vorgang endet.

Auch wenn in dem vorangehend beschriebenen Ausführungsbeispiel der Schüttloch-Folienstreifen 3 quer zur Beutel-Vorderseite 4 bzw. der Laufrichtung 11 ausgerichtet wurde, sei an dieser Stelle erwähnt, dass die Ausrichtung auch von dieser abweichen kann und jede beliebige Richtung annahmen kann. Auch kann der Schüttloch-Folienstreifen 3 an der Beutel-Hinterseite positioniert sein. Genauso gut kann der Schüttloch-Folienstreifen 3 auch in der Beutel-Seitenfalte 5 lokalisiert sein. Gleiches gilt sinngemäß auch für die Aufreißlasche 12.

Es wird abschließend noch einmal darauf hingewiesen, dass es sich bei dem vorhergehend detailliert beschriebenen Verfahren bzw. bei der Vorrichtung lediglich um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließen die Begriffe "Zone", "Bereich", "Materialschwächung", "Verpackungsfolie" usw. bzw. ihre kontextbezogene Verwendung nicht aus, dass diese aus mehreren einzelnen Zonen oder Bereichen bestehen, die gegebenenfalls auch räumlich verteilt sein können.

## Patentansprüche

1. Herstellungsverfahren für eine Verpackungsfolie (2), welches die nachfolgenden Verfahrensschritte aufweist, nämlich:
Zuführen einer Folienbahn (2A) entlang einer Laufrichtung (11), und Erzeugen einer eine Aufreißlasche (12) in der Folienbahn (2A) begrenzende erste Materialschwächung (13) an einer Aufreißlaschenposition, und
Zuführen eines Schüttloch-Folienstreifens (3), welcher Schüttloch-Folienstreifen (3) eine zumindest dreischichtige Struktur aufweist, wobei die zumindest dreischichtige Struktur zumindest ein Schüttloch (15) begrenzt und wobei die zumindest dreischichtige Struktur eine Folienstreifen-Siegelschicht (23) und eine benachbart zu der Folienstreifen-Siegelschicht (23) gelegene Haftkleberschicht (24) und eine benachbart zu der Haftkleberschicht (24) auf der von der Folienstreifen-Siegelschicht (23) abgewandten Seite der Haftkleberschicht (24) gelegene Trägerfolienschicht (25) aufweist, wobei die Folienstreifen-Siegelschicht (23) eine Sollbruchschicht realisiert, die derart beschaffen ist, dass sich unter Zugkraftweinwirkung auf einen das Schüttloch (15) zumindest teilweise umlaufenden Abtrennbereich dieser Sollbruchschicht ein Bruch entlang eines Randes des Abtrennbereiches in der Sollbruchsschicht ausbreitet, und
Anbringen des Schüttloch-Folienstreifens (3) mit der Folienstreifen-Siegelschicht (23) an jener Seite der Folienbahn (2A), die bei einer bestimmungsgemäßen Verwendung der Verpackungsfolie (2) eine Folieninnenseite (10) einer Verpackung (2) bildet, sodass besagte Zugkrafteinwirkung über die Aufreißlasche (12) auf den Abtrennbereich übertragbar ist und besagter Abtrennbereich und der angrenzende Bereich der Haftkleberschicht (24) einen mit der Aufreißlasche (12) zusammenwirkenden Wiederverschluss bilden.

2. Herstellungsverfahren nach Anspruch 1, wobei der Verfahrensschritt des Erzeugens der Aufreislasche (12) ein Wählen der Aufreißlaschenposition in Bezug auf eine Drucksteuermarke (14) auf der Folienbahn (2A) aufweist.

3. Herstellungsverfahren nach Anspruch 1 oder 2, wobei der Verfahrenschritt des Erzeugens der ersten Materialschwächung (13) ein Durchschneiden der Folienbahn (2A) in einem Anfangsbereich (16) der Aufreißlasche (12) aufweist.

4. Herstellungsverfahren nach einem der vorangehenden Ansprüche, wobei der Verfahrenschritt des Erzeugens der ersten Materialschwächung (13) ein Perforieren der Folienbahn (2A) zwischen einem Anfangsbereich (16) und einem Endbereich (17) der Aufreißlasche (12) aufweist.

5. Herstellungsverfahren nach einem der vorangehenden Ansprüche, wobei der Verfahrenschritt des Zuführens des Schüttloch-Folienstreifens (3) ein Abrollen eines Schüttloch-Folienstreifen-Bandes (18) und ein Ausstanzen eines Schüttlochs (15) und ein Abtrennen des Schüttloch-Folienstreifens (3) von dem Schüttloch-Folienstreifen-Band (18) aufweist.

6. Herstellungsverfahren nach einem der vorangehenden Ansprüche, wobei der Verfahrenschritt des Zuführens des Schüttloch-Folienstreifens (3) ein seitliches Einschießen des Schüttloch-Folienstreifens (3) in einer Querrichtung (25) in Bezug auf die Laufrichtung (11) aufweist.

7. Herstellungsverfahren nach einem der vorangehenden Ansprüche, wobei der Verfahrensschritt des Anbringens ein Positionieren des Schüttloch-Folienstreifens (3) in Bezug auf eine Drucksteuermarke umfasst, sodass eine zweite Materialschwächung (22) in dem Schüttloch-Folienstreifen (3), die das Schüttloch (15) zumindest teilweise umläuft und in Bezug auf die Haftkleberschicht (24) in dem der Folienstreifen-Siegelschicht (23) zugewandten Bereich der zumindest dreischichtigen Struktur ausgebildet ist, mit der ersten Materialschwächung (13) deckungsgleich verläuft.

8. Herstellungsverfahren nach einem der vorangehenden Ansprüche, wobei der Verfahrenschritt des Anbringens ein Versiegeln der Folienstreifen-Siegelschicht (23) des Schüttloch-Folienstreifens (3) mit der Folieninnenseite (10) in einem ersten Siegelbereich (19) aufweist, wobei der erste Siegelbereich (19) außerhalb der Aufreißlasche (12) um die Aufreißlasche (12) herum verläuft und diese vollständig umschließt.

9. Herstellungsverfahren nach einem der vorangehenden Ansprüche, wobei der Verfahrenschritt des Anbringens ein Versiegeln der Folienstreifen-Siegelschicht (23) des Schüttloch-Folienstreifens (3) mit der Folieninnenseite (10) in einem zweiten Siegelbereich (20) aufweist, wobei der zweite Siegelbereich (20) innerhalb der Aufreißlasche (12) um das Schüttloch (15) herum verläuft.

10. Herstellungsverfahren nach Anspruch 9, wobei das Versiegeln in dem zweiten Siegelbereich (20) derart erfolgt, dass die Versiegelung an einem Anfangsbereich (16) der Aufreißlasche (12) eine Spitzform (20) aufweist.

11. Herstellungsverfahren nach Anspruch 8 bis Anspruch 10 wobei das Versiegeln in dem ersten Siegelbereich (19) und in dem zweiten Siegelbereich (20) simultan mit einem Profilsiegelwerkzeug erfolgt.

12. Verpackungsfolie (2), die nach einem Verfahren gemäß Anspruch 1 bis 11 hergestellt wurde.

13. Verpackung, die eine Verpackungsfolie (2) aufweist, welche Verpackungsfolie (2) nach einem der Ansprüche 1 bis 11 hergestellt wurde.

14. Verwendung einer Verpackungsfolie (2), die nach einem der Ansprüche 1 bis 11 hergestellt wurde, auf einer Beutelmaschine, die zum Formen eines flexiblen Beutels (1) aus der Verpackungsfolie (2) ausgebildet ist.

15. Schüttloch-Folienstreifen (3),
der eine zumindest dreischichtige Struktur aufweist, welche zumindest dreischichtige Struktur zumindest ein Schüttloch (15) begrenzt, wobei die zumindest dreischichtige Struktur eine Folienstreifen-Siegelschicht (23) und eine benachbart zu der Folienstreifen-Siegelschicht (23) gelegene Haftkleberschicht (24) und eine benachbart zu der Haftkleberschicht (24) auf der von der Folienstreifen-Siegelschicht (23) abgewandten Seite der Haftkleberschicht (24) gelegene Trägerfolienschicht (25) aufweist, wobei die Folienstreifen-Siegelschicht (23) eine Sollbruchschicht realisiert, die derart beschaffen ist, dass sich unter Zugkraftweinwirkung auf einen das Schüttloch (15) zumindest teilweise umlaufenden Abtrennbereich dieser Sollbruchschicht ein Bruch entlang eines Randes des Abtrennbereiches in der Sollbruchsschicht ausbreitet.

## Claims

1. A manufacturing method for a packaging foil (2), which has the following steps, namely:
the supply of a foil web (2A) along a direction of travel (11), and the generation of a first material weakness (13) bounding a tear-open tab (12) in the foil web (2A) at a tear-open tab position, and
the supply of a pouring hole foil strip (3), which pouring hole foil strip (3) has an at least three-layer structure, wherein
the at least three-layer structure bounds at least one pouring hole (15), and wherein
the at least three-layer structure has a foil strip sealing layer (23), and a pressure-sensitive adhesive layer (24) located adjacent to the foil strip sealing layer (23), and a supporting foil layer (25) located adjacent to the pressure-sensitive adhesive layer (24) on the side of the pressure-sensitive adhesive layer (24) facing away from the foil strip sealing layer (23), wherein
the foil strip sealing layer (23) implements a predetermined fracture layer, which is created such that under the action of tensile force onto a detachment area of this predetermined fracture layer at least partially surrounding the pouring hole (15) a fracture propagates along one edge of the detachment area in the predetermined fracture layer, and attachment of the pouring hole foil strip (3) with the foil strip sealing layer (23) on each side of the foil web (2A), which in an intended use of the packaging foil (2) forms a foil inner face (10) of a packaging (2), so that the said tensile force action can be transferred via the tear-open tab (12) onto the detachment area, and the said detachment area and the adjacent area of the pressure-sensitive adhesive layer (24) act together with the tear-open tab (12) to form a re-closure.

2. The manufacturing method in accordance with Claim 1, wherein
the step of generating the tear-open tab (12) includes a selection of the tear-open tab position with reference to a printed control stamp (14) on the foil web (2A).

3. The manufacturing method in accordance with Claim 1 or 2, wherein
the step of generating the first material weakness (13) includes a cut through the foil web (2A) in a start area (16) of the tear-open tab (12).

4. The manufacturing method in accordance with one of the previous claims, wherein
the step of generating the first material weakness (13) includes a perforation of the foil web (2A) between a start area (16) and an end area (17) of the tear-open tab (12).

5. The manufacturing method in accordance with one of the previous claims, wherein
the step of supplying the pouring hole foil strip (3) includes an unrolling of a pouring hole foil strip tape (18) and a stamping out of a pouring hole (15) and a detachment of the pouring hole foil strip (3) from the pouring hole foil strip tape (18).

6. The manufacturing method in accordance with one of the previous claims, wherein
the step of supplying the pouring hole foil strip (3) includes a lateral insertion of the pouring hole foil strip (3) in a transverse direction (25) with reference to the direction of travel (11).

7. The manufacturing method in accordance with one of the previous claims, wherein
the attachment step includes a positioning of the pouring hole foil strip (3) with reference to a printed control stamp such that a second material weakness (22) in the pouring hole foil strip (3), which at least partially surrounds the pouring hole (15), and is designed with reference to the pressure-sensitive adhesive layer (24) in the area of the at least three-layer structure facing towards the foil strip sealing layer (23), runs congruently with the first material weakness (13).

8. The manufacturing method in accordance with one of the previous claims, wherein
the attachment step includes a sealing of the foil strip sealing layer (23) of the pouring hole foil strip (3) with the foil inner face (10) in a first sealing area (19), wherein
the first sealing area (19) runs outside the tear-open tab (12) around the tear-open tab (12) and surrounds the latter completely.

9. The manufacturing method in accordance with one of the previous claims, wherein
the attachment step includes a sealing of the foil strip sealing layer (23) of the pouring hole foil strip (3) with the foil inner face (10) in a second sealing area (20), wherein
the second sealing area (20) runs inside the tear-open tab (12) around the pouring hole (15).

10. The manufacturing method in accordance with Claim 9, wherein
the sealing in the second sealing area (20) is undertaken such that the seal in a start area (16) of the tear-open tab (12) has a pointed shape (20).

11. The manufacturing method in accordance with Claims 8 to 10, wherein
the sealing in the first sealing area (19) and in the second sealing area (20) is undertaken simultaneously with a profile sealing tool.

12. A packaging foil (2), which has been manufactured in accordance with a method in accordance with one of the Claims 1 to 11.

13. A packaging, which has a packaging foil (2), which packaging foil (2) has been manufactured in accordance with one of the Claims 1 to 11.

14. A use of a packaging foil (2), which has been manufactured in accordance with one of the Claims 1 to 11, on a bag-manufacturing machine, which is designed for the purpose of forming a flexible bag (1) from the packaging foil (2).

15. A pouring hole foil strip (3), which has an at least three-layer structure, which at least three-layer structure bounds at least one pouring hole (15), wherein
the at least three-layer structure has a foil strip sealing layer (23), and a pressure-sensitive adhesive layer (24) located adjacent to the foil strip sealing layer (23), and a supporting foil layer (25) located adjacent to the pressure-sensitive adhesive layer (24) on the side of the pressure-sensitive adhesive layer (24) facing away from the foil strip sealing layer (23), wherein
the film strip sealing layer (23) implements a predetermined fracture layer, which is created such that under the action of tensile force onto a detachment area at least partially surrounding the pouring hole (15) of this predetermined fracture layer a fracture propagates along one edge of the detachment area in the predetermined fracture layer.

## Revendications

1. Procédé de fabrication pour un film d'emballage (2) qui comprend les étapes de procédé suivantes, à saloir :
amenée d'une bande de film (2A) le long d'un sens de marche (11) et production d'un premier affaiblissement de matériau (13) délimitant une languette d'arrachement (12) dans la bande de film (2A) sur une position de la languette d'arrachement, et amenée d'un ruban de film à orifice de versement (3), lequel ruban de film à orifice de versement (3) présente une structure au moins à trois couches, sachant que la structure au moins à trois couches délimite au moins un orifice de versement (15) et sachant que la structure au moins à trois couches présente une couche de scellement de ruban de film (23) et une couche d'adhésif (24) placée dans le voisinage de la couche de scellement de ruban de film (23) et une couche de film porteur (5) placée sur le côté de la couche d'adhésif (24) détourné de la couche de scellement de ruban de film (23), sachant que la couche de scellement de ruban de film (23) réalise une couche de rupture nominale qui est ainsi faite que, sous l'effet de la force de traction sur une zone de séparation entourant au moins partiellement l'orifice de versement (15), cette couche de rupture nominale propage une rupture le long d'un bord de la zone de séparation dans la couche de rupture nominale, et
application du ruban de film à orifice de versement (3) avec la couche de scellement de ruban de film (23) sur le côté de la bande de film (2A) qui forme, lors d'une utilisation conforme à la destination du film d'emballage (2), un côté intérieur de film (10) d'un emballage (2), de façon à ce que ledit effet de la force de traction soit transmissible à la zone de séparation via la languette d'arrachement (12) et que ladite zone de séparation et la zone adjacente de la couche d'adhésif (24) forment une fermeture refermable coopérant avec la languette d'arrachement (12).

2. Procédé de fabrication selon la revendication 1, dans lequel l'étape de procédé de production de la languette d'arrachement (12) présente une sélection de la position de la languette d'arrachement par rapport à une encoche de réglage de la pression (14) sur la bande de film (2A).

3. Procédé de fabrication selon la revendication 1 ou 2, dans lequel l'étape de procédé de production du premier affaiblissement de matériau (13) présente un sectionnement de la bande de film (2A) dans une zone de départ (16) de la languette d'arrachement (12).

4. Procédé de fabrication selon l'une des revendications précédentes, dans lequel l'étape de procédé de production du premier affaiblissement de matériau (13) présente une perforation de la bande de film (2A) entre une zone de départ (16) et une zone de fin (17) de la languette d'arrachement (12).

5. Procédé de fabrication selon l'une des revendications précédentes, dans lequel l'étape de procédé d'amenée du ruban de film à orifice de versement (3) présente un déroulement d'une bande de ruban de film à orifice de versement (18) et un découpage à la presse d'un orifice de versement (15) et un sectionnement du ruban de film à orifice de versement (13) de la bande de ruban de film à orifice de versement (18).

6. Procédé de fabrication selon l'une des revendications précédentes, dans lequel l'étape de procédé d'amenée du ruban de film à orifice de versement (3) présente une insertion latérale du ruban de film à orifice de versement (13) dans une direction transversale (25) au sens de marche (11).

7. Procédé de fabrication selon l'une des revendications précédentes, dans lequel l'étape de procédé d'application comprend un positionnement du ruban de film à orifice de versement (3) par rapport à une encoche de réglage de la pression, de façon à ce qu'un deuxième affaiblissement de matériau (22) dans le ruban de film à orifice de versement (3), qui entoure au moins partiellement l'orifice de versement (15) et qui est formé par rapport à la couche d'adhésif (24) dans la partie de la structure au moins à trois couches tournée vers la couche de scellement de ruban de film (23), possède un tracé coïncidant avec le premier affaiblissement de matériau (13).

8. Procédé de fabrication selon l'une des revendications précédentes, dans lequel l'étape de procédé d'application comprend un scellement de la couche de scellement de ruban de film (23) du ruban de film à orifice de versement (3) avec le côté intérieur de feuille (10) dans une première zone de scellement (19), sachant que la première zone de scellement (19) a un tracé autour de la languette d'arrachement (12) en-dehors de la languette d'arrachement (12) et entoure celle-ci complètement.

9. Procédé de fabrication selon l'une des revendications précédentes, dans lequel l'étape de procédé d'application comprend un scellement de la couche de scellement de ruban de film (23) du ruban de film à orifice de versement (3) avec le côté intérieur de feuille (10) dans une deuxième zone de scellement (20), sachant que la deuxième zone de scellement (20) a un tracé autour de l'orifice de versement (15) à l'intérieur de la languette d'arrachement (12).

10. Procédé de fabrication selon la revendication 9, dans lequel le scellement dans la deuxième zone de scellement (20) a lieu de telle sorte que le scellement présente une forme pointue (20) sur une zone de départ (16) de la languette d'arrachement (12).

11. Procédé de fabrication selon les revendications 8 à 10, dans lequel le scellement dans la première zone de scellement (19) et dans la deuxième zone de scellement (20) s'effectue simultanément avec un outil de scellement de profilé.

12. Film d'emballage (2) qui a été fabriqué selon un procédé selon les revendications 1 à 11.

13. Emballage, qui présente un film d'emballage (2), lequel film d'emballage (2) a été fabriqué selon l'une des revendications 1 à 11.

14. Utilisation d'un film d'emballage (2), qui a été fabriqué selon l'une des revendications 1 à 11, sur une machine de fabrication de sachets qui est formée pour former un sachet souple (1) à partir du film d'emballage (2).

15. Film à orifice de versement (3) qui présente une structure au moins à trois couches, laquelle structure au moins à trois couches délimite au moins un orifice de versement (15), sachant que la structure au moins à trois couches présente une couche de scellement de ruban de film (23) et une couche d'adhésif (24) placée dans le voisinage de la couche de scellement de ruban de film (23) et une couche de film porteur (5) placée sur le côté de la couche d'adhésif (24) détourné de la couche de scellement de ruban de film (23), sachant que la couche de scellement de ruban de film (23) réalise une couche de rupture nominale qui est ainsi faite que, sous l'effet de la force de traction sur une zone de séparation entourant au moins partiellement l'orifice de versement (15), cette couche de rupture nominale propage une rupture le long d'un bord de la zone de séparation dans la couche de rupture nominale.
